# FASCICULE DE BREVET EUROPEEN

(11) **EP 1 055 529 B1**
(45) Date de publication et mention de la délivrance du brevet: **31.08.2005**
(21) Numéro de dépôt: 00111154.1
(22) Date de dépôt: 24.05.2000
(51) Int. Cl.: B60C 1/00, C08K 3/22, C08L 21/00

(54) **Composition de caoutchouc colorée pour enveloppe de pneumatique**
Gefärbte Kautschukzusammensetzung für Reifen
Coloured rubber composition for tyre

(30) Priorité: 28.05.1999 FR 9906857
(43) Date de publication de la demande: 29.11.2000
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Daude, Hélène, 63000 Clermont-Ferrand (FR)
(74) Mandataire: Cohen, Sylvia

(56) Documents cités:
- EP-A- 0 463 205
- WO-A-00/73372
- WO-A-00/73373
- GB-A- 354 760
- GB-A- 555 332
- US-A- 3 296 185
- US-A- 5 124 390

## Description

La présente invention est relative à des compositions de caoutchouc destinées à être utilisées pour la fabrication d'enveloppes de pneumatiques.

Plus particulièrement, l'invention a pour objet des compositions de caoutchouc colorées destinées à constituer au moins une partie de la surface extérieure d'enveloppes de pneumatiques. Le terme " coloré " est entendu ici comme excluant la couleur noire, c'est-à-dire toutes les couleurs y compris le blanc.

Ces compositions sont ainsi destinées à recouvrir au moins partiellement la surface d'enveloppes de pneumatiques quelle que soit la nature et la composition des mélanges caoutchouteux sur lesquels elles vont être déposées. Bien entendu , dans la mesure où il ne s'agit que d'une couverture de surface, ces compositions sont plus particulièrement destinées à recouvrir des surfaces d'enveloppes de pneumatiques dites "non-usantes" c'est-à-dire qui ne sont pas au contact de la route dans des conditions normales d'utilisation des pneumatiques. Ainsi, de telles compositions colorées conformes à l'invention, ayant des fins notamment décoratives et de marquage, pourront constituer au moins partiellement la surface extérieure d'un flanc d'enveloppe de pneumatique ou des fonds de sculptures de la bande de roulement.

Or, comme on le sait, les vulcanisats de caoutchoucs diéniques essentiellement insaturés, naturels ou synthétiques, en raison de la présence de doubles liaisons sur leur chaîne moléculaire, sont susceptibles, s'ils ne sont pas protégés, de se détériorer plus ou moins rapidement après une exposition prolongée à l'atmosphère en raison de mécanismes connus d'oxydation entraînant une rigidification et une fragilisation des vulcanisats suite à des ruptures des doubles liaisons et à l'oxydation des ponts de soufre. De tels mécanismes complexes ont été décrits notamment dans les documents suivants "Antidegradants for tire applications" dans "Tire compounding", Education Symposium N°37 (ACS), Cleveland, Communication I, Octobre 1995; "Non-blooming high performance antidegradants", Kautschukn Gummi Kunststoffe, 47. Jahrgang, N°4, 1994, 248-255; "Antioxydants" dans Encycl. Polym. Sci. And Eng., 2nd Edition, Vol. 2, 73-91.

Ces phénomènes d'oxydation ont pu être peu à peu inhibés grâce à la mise au point et à la commercialisation de divers agents antioxydants dont les plus efficaces sont connus pour être des dérivés de la quinoléine (TMQ), ou des dérivés de la p-phénylènediamine (PPD ou PPDA) encore plus actifs que les premiers tels que la N-1,3-diméthylbutyl-N'-phényl-p-phénylènediamine (6-PPD). Ces antidégradants type TMQ et PPD, parfois même associés, sont aujourd'hui très répandus et utilisés de manière quasi-systématique, comme cela est précisé dans les publications citées précédemment, dans les compositions de caoutchouc conventionnelles chargées au moins en partie de noir de carbone leur donnant cette couleur noire caractéristique.

Or les agents antioxydants cités ci-dessus, et en particulier les dérivés TMQ ou PPD, ne sont pas stables à la lumière et, sous l'effet du rayonnement U.V., génèrent des espèces chimiques colorées qui provoquent une altération de couleur des compositions de caoutchouc les tachant en brun sombre. Il est clair que cette caractéristique exclut l'utilisation de tels agents au sein de compositions blanches, claires ou colorées, mais elle pose également des problèmes d'utilisation de compositions blanches, claires ou colorées au contact de compositions contenant ces agents antioxydants qui vont en effet, si rien n'est prévu pour les en empêcher, naturellement migrer dans et à la surface des compositions blanches, claires ou colorées et les tâcher.

C'est pourquoi, il est fort complexe de mettre au point des compositions colorées destinées à recouvrir une partie de la surface extérieure d'enveloppes de pneumatiques et de résister au tachage dû aux agents antioxydants présents dans les autres compositions utilisées dans les enveloppes de pneumatiques.

La plupart des solutions envisagées repose sur l'utilisation de constituants susceptibles d'être introduits dans des compositions caoutchouteuses et possédant des propriétés d'imperméabilité. Dans le domaine du pneumatique, il est connu de faire appel aux propriétés d'imperméabilité du caoutchouc butyle. Cependant l'utilisation du caoutchouc butyle pose de nombreux problèmes.

En effet, dans certaines solutions permettant la réalisation de flancs blancs ou colorés, on a envisagé de modifier l'architecture des enveloppes de pneumatiques en prévoyant des compositions " écrans " fortement chargées en caoutchouc butyle afin d'empêcher la migration des agents antioxydants tachants et destinées à séparer les compositions blanches des autres compositions constitutives desdites enveloppes. On comprend aisément que de telles réalisations sont susceptibles de remettre en cause les propriétés et les performances des enveloppes de pneumatiques concernées dans la mesure où l'on réalise des modifications notables dans leur architecture. De plus, il est connu que de fortes proportions de caoutchouc butyle dans des compositions créent des problèmes d'adhésion de ces dernières aux autres compositions présentes dans le pneumatique.

D'autres solutions ont consisté à introduire directement du caoutchouc butyle au sein des compositions colorées. Ainsi la publication CA-2 228 692 décrit une composition de flancs blancs utilisant, afin de constituer une barrière pour les agents antioxydants tachants, une base élastomérique majoritairement constituée de caoutchoucs butyle. Ces solutions permettent d'éviter certaines modifications de l'architecture de l'enveloppe de pneumatique mais ne règlent pas les problèmes liés à l'adhésion. C'est pourquoi, l'interface obtenue entre les flancs blancs et les autres mélanges présents dans le pneumatique étant fragile, de telles compositions pour flancs blancs ne peuvent être déposées que sur des parties très limitées du flanc qui ne sont pas sollicitées afin d'éviter des décollements d'interfaces.

Enfin d'autres solutions consistent à réaliser des compositions destinées à être utilisées en masse et non plus seulement en surface, et à renoncer à la présence des agents antioxydants à base des dérivés PPD ou TMQ au sein de ces compositions mais ceux-ci étant très efficaces, leur remplacement nécessite la mise en place de systèmes de protection complexes comme des exemples sont décrits dans la publication WO 99/02590. Notons, de plus, qu'il n'est généralement pas envisageable de remplacer dans toutes les compositions présentes dans le pneumatique les agents antioxydants à base des dérivés PPD ou TMQ qui restent très performants, ce qui du fait de leur migration nécessite de prévoir également une solution telle que celle utilisant du caoutchouc butyle dont on a déjà évoqué les inconvénients.

L'invention a pour objet des compositions colorées susceptibles de constituer une partie de la surface extérieure d'enveloppes de pneumatiques palliant les inconvénients cités précédemment.

La demanderesse a découvert d'une façon surprenante que des compositions caoutchouteuses colorées, vulcanisables au soufre, très fortement chargées en dioxyde de titane ou en monoxyde de zinc, soit à un taux de plus de 100 parties pour 100 parties en poids d'élastomère d'une de ces charges minérales permettaient de réaliser des compositions colorées de surface pour enveloppes de pneumatiques susceptibles d'être déposées sur les compositions contenant des agents antioxydants tachants en préservant leur couleur de surface, et ceci sans nécessiter l'emploi d'agents barrières typiques aux antioxydants.

En effet bien que les propriétés du dioxyde de titane qui, de par son activité photocatalytique, entraînent la dégradation de molécules organiques ou biorganiques soient connues, ce dernier est généralement utilisé dans des compositions caoutchouteuses colorées pour conférer une coloration blanche à ces compositions avec un taux correspondant typiquement à 10 à 55 parties pour cent parties en poids d'élastomère (pce), comme le précise la publication CA-2 228 692.

Ainsi, une utilisation de si fortes quantités de dioxyde de titane semble tout à fait contraire aux connaissances de l'homme de l'art. En effet, d'une part les propriétés de dégradation des doubles liaisons sont contraires aux souhaits et aux caractéristiques protectrices prévues dans le pneumatique pour précisément éviter cette dégradation par oxydation, et d'autre part, le fait d'avoir une composition avec un rapport très faible entre le taux de base élastomérique et le taux de charge minérale entraîne l'homme du métier à douter très fortement de pouvoir réaliser une telle composition sous forme d'un mélange, plutôt que par exemple une composition qui reste sous la forme d'une poudre, et de savoir si une telle composition ne risque pas de se décoller dans le temps des autres compositions du pneumatique.

Le monoxyde de zinc possède également de très intéressantes propriétés photocatalytiques même si elles sont aujourd'hui beaucoup moins utilisées que celles du dioxyde de titane. Par ailleurs, dans le domaine des pneumatique on utilise très fréquemment le monoxyde de zinc dans de très faibles proportions, de l'ordre de quelques parties en poids pour cent parties d'élastomère, pour sa participation au système de vulcanisation des polymères caoutchouteux et pas du tout pour sa couleur ou ses autres propriétés.

L'invention a pour objet un pneumatique selon la revendication 1.

L'invention concerne également des pneumatiques dont une partie au moins de la surface extérieure " non-usante " des flancs de pneumatique et/ou de la bande de roulement comprend une telle composition de caoutchouc colorée.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM (terpolymère éthylène-propylène-diène) n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique essentiellement insaturé susceptible d'être mis en oeuvre dans les compositions conformes à l'invention:
- tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

De manière particulièrement préférentielle, l'élastomère diénique de la composition conforme à l'invention est choisi dans le groupe des élastomères diéniques fortement insaturés constitué par les polybutadiènes (BR), les polyisoprènes (IR) ou du caoutchouc naturel (NR), les copolymères de butadiène-styrène (SBR), les copolymères de butadiène-isoprène (BIR), les copolymères de butadiène-acrylonitrile (NBR), les copolymères d'isoprène-styrène (SIR), les copolymères de butadiène-styrène-isoprène (SBIR) ou un mélange de deux ou plus de ces composés.

Néanmoins de tels polymères diéniques peuvent être utilisés seuls ou en coupage avec d'autres élastomères conventionnellement utilisés dans les pneumatiques tels que des élastomères diéniques constitués par :
- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
- un copolymère d'isobutène et d'isoprène (caoutchouc butyle ou IIR), ainsi que les versions halogénées, en particulier chlorées ou bromées (BIIR), de ce type de copolymère,
- ou un copolymère d'isobutène et de paraméthylstyrène, ainsi que les versions halogénées, en particulier chlorées ou bromées (BIMS), de ce type de copolymère.

Afin que les propriétés photocatalytiques du dioxyde de titane ou du monoxyde de zinc puissent efficacement être mises en oeuvre, c'est-à-dire que la base élastomérique possède suffisamment de liaisons insaturées susceptibles d'être dégradées, et afin de pouvoir déposer les compositions colorées conformes à l'invention sur n'importe quelle surface non usante du pneumatique comme on l'a précisé au début de la description, il est nécessaire que ladite base élastomérique soit constituée à titre majoritaire d'élastomères diéniques essentiellement insaturés. De manière avantageuse, la base élastomérique peut comprendre majoritairement un coupage de caoutchouc naturel et de polybutadiène.

Les charges minérales mises en oeuvre dans les compositions conformes à l'invention sont choisies parmi le dioxyde de titane ou le monoxyde de zinc avec un taux supérieur à 100 parties pour 100 parties en poids d'élastomère. Les effets sont améliorés avec l'augmentation du taux de charge minérale à un taux supérieur à 150 pce, voire même supérieur à 200 pce. A titre de dioxyde de titane et de monoxyde de zinc conviennent tous les dioxydes de titane et monoxydes de zinc connus par l'homme de l'art.

Ces deux charges minérales étant de couleur blanche, on peut, bien entendu, utiliser tout pigment colorant ou azurant optique afin d'obtenir une composition d'un blanc plus lumineux ou d'une autre couleur. Un taux minimal de 10% de pigment ou d'azurant par rapport à la quantité de charge minérale est préconisé pour obtenir la coloration souhaitée. On peut également utiliser conjointement ces deux charges ou les utiliser en coupage avec d'autres charges blanches ou colorantes.

De manière avantageuse, la teneur en pigments est supérieure à 10% de la teneur en dioxyde de titane ou en monoxyde de zinc, et plus avantageusement encore supérieure à 50% de cette teneur.

Selon un autre mode de réalisation avantageuse de l'invention, la composition de caoutchouc colorée contient une charge minérale comprenant plus de 100 pce de dioxyde de titane et au moins un azurant optique dans une teneur supérieure à 10% de la teneur en dioxyde de titane.

On peut ainsi utiliser tout type d'agent colorant connu de l'homme du métier, cet agent colorant pouvant être organique ou inorganique, soluble ou non dans le compositions conformes à l'invention. A titre d'exemple, on peut citer des colorants minéraux tels que par exemple des métaux en poudre, notamment du cuivre ou de l'aluminium en poudre, ou divers oxydes métalliques, notamment des silicates, des aluminates, des titanates, des oxydes ou hydroxydes de fer, des oxydes mixtes d'éléments métalliques différents tels que Co, Ni, Al, Zn. On peut citer également des pigments organiques tels que des indanthrones, des diketo-pyrrolo-pyrroles ou des condensés diazo, des pigments organométalliques tels que des phtalocyanines.

La couleur des compositions conformes à l'invention peut ainsi varier dans une très large gamme, à titre d'exemple dans différentes teintes de rouge, orange, vert, jaune, bleu ou encore de marron ou de gris.

On peut également prévoir la présence de charge renforçante telle que du noir de carbone ou de la silice pour conférer d'autres types de propriétés aux compositions conformes à l'invention, en tenant compte, bien entendu, de la couleur de cette charge qui peut modifier ou nuire à la coloration souhaitée de la composition. Notons, par exemple, que la présence de noir de carbone dans une très faible proportion (de l'ordre de quelques pce) peut permettre avec des pigments rouge, bleu ou vert d'obtenir une coloration grenat, bleu foncé ou vert foncé.

En tenant compte des aspects cités ci-dessus de coloration, les compositions conformes à l'invention peuvent contenir outre les composés décrits précédemment tout ou partie des constituants habituellement utilisés dans les compositions de caoutchouc diénique de pneumatiques, comme par exemple des plastifiants, un système de réticulation à base soit de soufre, soit de donneurs de soufre et/ou de peroxyde, le taux de soufre dans la composition restant inférieur à 10 pce, des accélérateurs de vulcanisation, des huiles d'extension, du type aromatique, naphténiques ou paraffiniques, ou encore divers agents anti-fatigue.

Les compositions de caoutchouc sont préparées en mettant en oeuvre les élastomères diéniques selon des techniques tout à fait connues, par travail thermomécanique en une ou plusieurs étapes dans un mélangeur interne à palettes, suivi d'un mélangeage sur un mélangeur externe.

Selon la technique classique, on utilise un mélangeur interne usuel afin de mixer les élastomères, la charge et les autres constituants de la composition à l'exception du système de vulcanisation. Le mélange obtenu est ensuite repris sur un mélangeur externe, généralement un mélangeur à cylindres, et on y ajoute alors le système de vulcanisation. Une ou plusieurs étapes peuvent être ajoutées dans le mélangeur interne, essentiellement dans le but de faire subir au mélange un traitement thermomécanique complémentaire.

L'invention est illustrée à titre non limitatif par les exemples qui suivent mais qui ne sauraient constituer une limitation de la portée de l'invention.

### Exemples

Dans ces exemples, les propriétés des compositions sont évaluées comme indiqué ci-après.

Les valeurs colorimétriques sont déterminées à l'aide d'un spectrocolorimètre Microflash 200 D DATA COLOR en configuration D65/10 (lumière du jour; angle d'observation 10°). Les propriétés colorimétriques sont mesurées de manière connue, selon le manuel d'instruction du colorimètre (mai 1995), par analyse du spectre de réflectance des éprouvettes.

Ces mesures sont reportées dans le système " CIE LAB " des 3 coordonnées tridimensionnelles colorimétriques L*, a*, b*, système dans lequel :
- l'axe a* représente la coordonnée de chromaticité vert-rouge, avec une échelle allant de -100 (vert) à +100 (rouge);
- l'axe b* représente la coordonnée de chromaticité bleu-jaune, avec une échelle allant de -100 (bleu) à +100 (jaune);
   -- l'axe L* représente la coordonnée de luminosité, avec une échelle allant du 0 (noir) à 100 (blanc);
- ΔE = [(ΔL*)² + (Δa*)² + (Δb*)²]^{1/2} représente l'écart colorimétrique global moyen de chaque échantillon par rapport à un témoin non vieilli; plus ΔE est élevé, plus la couleur de la composition a évolué.

Lors des tests de colorimétrie, les éprouvettes utilisées sont des éprouvettes non normalisées consistant en des lanières de caoutchouc de dimensions (1 x 1 x e) égales à (150 x 150 x 3), en millimètres avec une face A constituée par une composition de référence sur une épaisseur de 2 mm et l'autre face B comprenant sur toute son épaisseur deux lanières de caouthcouc sur une largeur de 65 mm respectivement, situées de part et d'autre d'une lanière de caoutchouc d'une composition à tester.

Ces éprouvettes sont laissées statiques exposées à l'air ambiant extérieur, pendant une période donnée, la face B comprenant la composition à tester étant située à l'air libre. A l'issue de cette période, la surface de la face B est frottée avec un chiffon ordinaire imbibé d'éthanol de manière à permettre l'élimination des éventuelles poussières de farinage qui ne s'éliminent pas seules en statique, puis on procède à la mesure de l'écart colorimétrique ΔE. On considérera qu'un écart colorimétrique ΔE inférieur ou égal à 25 est acceptable, avec une approximation de ± 2. En effet, un tel écart colorimétrique est représentatif d'une évolution de couleur restant dans la gamme de la couleur initiale.

Pour l'ensemble des exemples qui suivent la composition à tester comprend une base élastomérique constitué par un mélange 60/40 d'un caoutchouc naturel et d'un polybutadiène, qui sont tous deux des élastomères diéniques fortement insaturés.

A titre de composition de référence, qu'on nommera la composition A dans ce qui suit, on a choisi ici une composition support proche de celles utilisées dans les flancs de pneumatiques chargés au noir de carbone. Il est clair que ces exemples ne limitent en rien les résultats obtenus à la superposition de compositions conformes à l'invention sur ce type de compositions conventionnelles, sachant que la démonstration tient essentiellement à la présence des agents antioxydants dans ces compositions.

Ainsi la formulation de la composition A est la suivante, où toutes les parties sont exprimées en poids et dans laquelle l'élastomère est constitué par un coupage de caoutchouc naturel et de polybutadiène 35/65, :

| | |
|---|---|
| Elastomère | 100 |
| Noir de carbone (N660) | 60 |
| Huile aromatique | 20 |
| Cire (a) | 1 |
| Oxyde de zinc | 3 |
| Acide stéarique | 1 |
| TMQ | 1 |
| 6-PPD | 3 |
| Sulfénamide (b) | 0,95 |
| Soufre | 1,6 |

| | |
|---|---|
| (a) : cire antiozone (Redezon 500 de la société Repsol) | |
| (b) : sulfénamide : N-cyclohexyl-2-benzothiazyl sulfénamide. | |

La formulation de chacune des compositions B à tester utilisées pour les éprouvettes varie uniquement sur la nature et la quantité de charge et/ou de pigment utilisés, soit une formulation suivante où toutes les parties sont exprimées en poids et dans laquelle l'élastomère est constitué par un coupage de caoutchouc naturel et de polybutadiène 60/40 :

| | |
|---|---|
| Elastomère | 100 |
| Huile paraffinique | 15 |
| Acide stéarique | 2 |
| Oxyde de Zinc | 3 |
| Soufre | 2 |
| Sufénamide (a) | 2 |
| Charge et/ou pigment | variable * |

| | |
|---|---|
| (a) : sulfénamide : N-cyclohexyl-2-benzothiazyl sulfénamide, | |
| * Les charges et pigments utilisés dans les exemples sont les suivants : - jaune 3G : pigment jaune Cromophtal (société Ciba-Geigy), - silice : ultrasil VN2 (société Degussa), - oxyde de titane " anatase " (société Thann et Mulhouse) dans les exemples 1, 2, 3, 4, - oxyde de titane " rutile RL18A " (société Thann et Mulhouse) dans l'exemple 3. | |

Afin de réaliser ces compositions B, on procède pour tous les exemples qui suivent de la manière suivante : on introduit l'élastomère diénique ou le mélange d'élastomères dans une mélangeur interne, rempli à 75% et dont la température est d'environ 30°C, puis après un temps approprié de malaxage, par exemple de l'ordre d'une minute, on ajoute tous les autres ingrédients à l'exception du système de vulcanisation et 2/3 de la charge minérale, puis après un nouveau temps de malaxage on introduit les 1/3 restant de la charge minérale et on on poursuit le travail thermomécanique de malaxage jusqu'à une température de tombée déterminée (165°C). On récupère le mélange ainsi obtenu puis on ajoute le système de vulcanisation sur un mélangeur externe (homo-finisseur) à 30°C. La vulcanisation est effectuée à 165°C pendant 10 mn.

Pour la composition A, il n'est pas nécessaire étant donné le faible taux de charge, d'introduire cette dernière en deux fois.

### Exemple 1

Cet exemple a pour but de comparer la résistance au tachage de compositions incluant des charges distinctes. Les éprouvettes réalisées contiennent, comme on l'a dit précédemment, le mélange de composition A de référence et des compositions B à tester ayant dans leur formulation en plus des constituants cités précédemment respectivement :
- pour les compositions B1₍₁₀₀₎, B1₍₁₅₀₎, B1₍₂₀₀₎ : 20 pce d'un pigment coloré jaune 3G et respectivement 50/50, 75/75 et 100/100 pce d'un coupage craie/kaolin,
- pour les compositions B2₍₅₀₎, B2₍₁₀₀₎ : 5 pce d'un pigment coloré jaune 3G et respectivement 50 et 100 pce de silice,
- pour les compositions B3₍₅₀₎, B3₍₁₀₅₎, B3₍₁₅₀₎, B3₍₂₀₀₎ : 20 pce d'un pigment coloré jaune 3G et respectivement 50, 105, 150 et 200 pce de dioxyde de titane,
- et pour les compositions B4₍₁₅₀₎, B4₍₂₀₀₎ : 20 pce d'un pigment coloré jaune 3G et respecivement 150 et 200 pce de monoxyde de zinc.

On notera qu'à des fins de comparaison plus aisée entre les différentes éprouvettes réalisées, on a choisi d'utiliser un pigment jaune permettant d'avoir avant photo-oxydation les mêmes colorations, la quantité de jaune 3G étant plus faible dans le cas de la silice qui n'est pas une charge opacifiante contrairement aux autres charges présentes dans cet exemple.

Les compositions B3-105, B3-150, B3-200, B4-150, B4-200 sont des compositions conformes à l'invention.

Les résultats obtenus sont reportés dans le tableau 1 qui suit.

**Tableau 1**

| **Composition** | **B1**_{**(100)**} | **B1**_{**(150)**} | **B1**_{**(200)**} | **B2**_{**(50)**} | **B2**_{**(100)**} | **B3**_{**(50)**} | **B3**_{**(105)**} | **B3**_{**(150)**} | **B3**_{**(200)**} | **B4**_{**(150)**} | **B4**_{**(200)**} |
|---|---|---|---|---|---|---|---|---|---|---|---|
| Δ**E*** | 48 | 43 | 44 | 44 | 30 | 33 | 26 | 19 | 15 | 25 | 26 |

| | | | | | | | | | | | |
|---|---|---|---|---|---|---|---|---|---|---|---|
| * Les ΔE ont été calculés après 90 jours d'exposition des éprouvettes à l'air libre. | | | | | | | | | | | |

On constate que les compositions B1 et B2 contenant des charges minérales silice ou craie/kaolin même dans de fortes quantités présentent des altérations de couleur inacceptables. C'est également le cas pour la composition B3 lorsque cette dernière ne contient que 50 pce de dioxyde de titane.

Les autres compositions B3 et B4 conformes à l'invention sont tout à fait acceptables et montrent que la surface a gardé une coloration jaune comprise dans la gamme du jaune intiale.

### Exemple 2

Cet exemple a pour but de comparer la résistance au tachage de différentes compositions conformes à l'invention qui présentent des quantités différentes de pigment coloré en comparaison notamment de l'ajout d'autre charge telle que la craie.

Les compositions B à tester dans les éprouvettes réalisées ont dans cet exemple dans leur formulation en plus des constituants cités précédemment respectivement :
- pour les compositions B3'_{/10}, B3'_{/20}, B3'_{/50}, B3'_{/100} : 105 pce de dioxyde de titane et respectivement 10, 20, 50 et 100 pce de jaune 3G,
- pour les compositions B3''_{/20} : 105 pce de dioxyde de titane, 20 pce de jaune 3G et 100 pce de craie.

Les résultats obtenus sont consignés dans le tableau 2 qui suit.

**Tableau 2**

| **Composition** | **B3'**_{**/10**} | **B3'**_{**/20**} | **B3'**_{**/50**} | **B3'**_{**/100**} | **B3''**_{**/20**} |
|---|---|---|---|---|---|
| Δ**E*** | 27 | 20 | 13 | 12 | 21 |

| | | | | | |
|---|---|---|---|---|---|
| * Les ΔE ont été calculés après 90 jours d'exposition des éprouvettes à l'air libre. | | | | | |

Il est clair que dans l'ensemble de ces compositions B3' conformes à l'invention, l'écart colorimétrique ΔE est acceptable, cependant on note une très nette amélioration des résultats lorsque l'on dépasse un seuil correspondant approximativement à 50 % de la quantité de dioxyde de titane présent.

On constate par ailleurs, que la présence en supplément d'une autre charge minérale, la craie, ne semble pas nuire aux propriétés de la composition B3'' mais ne permet pas d'améliorer les résultats obtenus.

### Exemple 3

Cet exemple a pour but de comparer différentes compositions conformes à l'invention comprenant des formes de dioxyde de titane.

Les compositions B à tester dans les éprouvettes réalisées ont dans cet exemple dans leur formulation en plus des constituants cités précédemment respectivement :
- pour les compositions B3A₍₁₀₅₎, B3A₍₂₀₀₎ :20 pce de jaune 3G et respectivement 105 et 200 pce de dioxyde de titane sous forme anatase,
- pour les compositions B3R₍₁₀₅₎, B3R₍₂₀₀₎ : 20 pce de jaune 3G et respectivement 105 et 200 pce de dioxyde de titane sous forme rutile.

Les résultats obtenus sont consignés dans le tableau 3 suivant.

**Tableau 3**

| **Composition** | **B3A**_{**(105)**} | **B3A**_{**(200)**} | **B3R**_{**(105)**} | **B3R**_{**(200)**} |
|---|---|---|---|---|
| Δ**E*** | 19 | 16 | 16 | 18 |

| | | | | |
|---|---|---|---|---|
| * Les ΔE ont été calculés après 30 jours d'exposition des éprouvettes à l'air libre. | | | | |

On constate qu'effectivement les compositions conformes à l'invention présentent un écart colorimétrique acceptable quelle que soit la forme du dioxyde de titane.

### Exemple 4

Cet exemple a pour but de comparer deux compositions conformes à l'invention à quatre autres compositions utilisant une base élastomérique différente.

On compare ici les compositions B3₍₁₀₅₎ et B3₍₂₀₀₎ dont la formulation est précisée dans l'exemple 1 à des compositions C présentant une formulation identique à celle des compositions B à l'exception de la base élastomérique consituée pour C1 d'EPDM et pour C2 de BIIR, ces deux élastomères n'étant pas des élastomères diéniques essentiellement insaturés, et qui comprennent :
- pour les compositions C1₍₁₀₅₎ et C1₍₂₀₀₎ : 20 pce de jaune 3G et respectivement 105 et 200 pce de dioxyde de titane,
- et pour les compositions C2₍₁₀₅₎ et C2₍₂₀₀₎: 20 pce de jaune 3G et respectivement 105 et 200 pce de dioxyde de titane.

Les résultats sont consignés dans le tableau 4 qui suit.

**Tableau 4**

| **Composition** | **B3**_{**(105)**} | **B3**_{**(200)**} | **C1**_{**(105))**} | **C1**_{**(200)**} | **C2**_{**(105)**} | **C2**_{**(200)**} |
|---|---|---|---|---|---|---|
| Δ**E*** | 19 | 16 | 73 | 57 | 29 | 39 |

| | | | | | | |
|---|---|---|---|---|---|---|
| * Les ΔE ont été calculés après 30 jours d'exposition des éprouvettes à l'air libre. | | | | | | |

On voit très clairement que le changement élastomérique réalisé dans les compositions C1 et C2 ne permet plus au dioxyde de titane de jouer son rôle de photodégradant, en effet il manque des liaisons insaturées permettant l'autonettoyage de surface.

Par ailleurs, on remarque que les résultats obtenus avec le caoutchouc butyle, pour les compositions C2, bien qu'inacceptable est nettement meilleur que celui obtenu avec l'EPDM, ce qui confirme bien le rôle de barrière que peut avoir le caoutchouc butyle du fait de son imperméabilité mais qui reste ici insuffisant à préserver la couleur de surface du mélange.

Ainsi, de manière inattendue pour l'homme du métier, on utilise dans les compositions conformes à l'invention les propriétés photocatalytiques du dioxyde de titane ou du monoxyde de zinc pour dégrader l'élastomère lui-même, en introduisant le dioxyde de titane ou le monoxyde de zinc dans la matrice de la composition caoutchouteuse, afin d'obtenir une érosion de surface permettant une élimination du tachage lié aux agents antioxydants. Dans une utilisation dynamique des pneumatiques, cet " autonettoyage " qui correspond à un renouvellement de surface entraîne également le départ des salissures venant de l'extérieur du pneumatique telles que les poussières de freins.

## Revendications

1. Pneumatique comprenant une composition de caoutchouc colorée dont la base polymérique est constituée majoritairement par un élastomère diénique issu au moins en partie de monomères diènes conjugués, ayant un taux de motifs ou unités d'origine diénique qui est supérieur à 15% en moles, **caractérisé en ce que** la composition de caoutchouc a une teneur supérieure à 100 parties pour cent parties en poids d'élastomère, pce, d'une charge minérale choisie parmi le dioxyde de titane et le monoxyde de zinc, une teneur inférieure à 10 pce de soufre et comprend tout pigment colorant ou azurant optique, avec une teneur supérieure à 10 % de la teneur en dioxyde de titane ou en monoxyde de zinc.

2. Pneumatique selon la revendication 1, dans lequel la composition de caoutchouc comprend un pigment coloré à titre d'agent colorant, la teneur en pigment coloré étant supérieure à 50 % de la teneur en dioxyde de titane ou en monoxyde de zinc.

3. Pneumatique selon la revendication 1, dans lequel la composition de caoutchouc comprend un azurant optique et du dioxyde de titane à titre de charge minérale.

4. Pneumatique selon l'une quelconque des revendications 1 à 3, dans lequel la composition de caoutchouc comprend une teneur en charge minérale supérieure à 150 pce.

5. Pneumatique selon l'une quelconque des revendications 1 à 4, dans lequel la base élastomérique comprend majoritairement un coupage de caoutchouc naturel et de polybutadiène.

6. Pneumatique selon l'une quelconque des revendications 1 à 5, dans lequel une partie au moins de la surface extérieure d'un flanc du pneumatique comprend la composition de caoutchouc colorée.

7. Pneumatique selon l'une quelconque des revendications 1 à 5, dans lequel une partie au moins de la surface extérieure de la bande de roulement du pneumatique comprend la composition de caoutchouc colorée.

## Patentansprüche

1. Luftreifen, der eine farbige Kautschukmischung enthält, deren polymere Grundmasse hauptsächlich aus einem Dienelastomer gebildet wird, das zumindest zum Teil von konjugierten Dienmonomeren abgeleitet ist und das einen Gehalt an Gruppen oder Einheiten aufweist, die von Dienen stammen, der über 15 Mol-% liegt, **dadurch gekennzeichnet, dass** die Kautschukmischung in einem Mengenanteil, der größer ist als 100 Teile auf 100 Gewichtsteile Elastomer (pce), einen anorganischen Füllstoff, der unter Titandioxid und Zinkmonoxid ausgewählt ist, und in einem Mengenanteil unter 10 pce Schwefel aufweist und beliebige färbende Pigmente oder optische Aufheller in einem Mengenanteil enthält, der größer ist als 10 % des Gehalts an Titandioxid oder Zinkmonoxid.

2. Luftreifen nach Anspruch 1, wobei die Kautschukmischung als Farbmittel ein farbiges Pigment enthält, wobei der Mengenanteil des farbigen Pigments größer ist als 50 % des Gehalts an Titandioxid und Zinkmonoxid.

3. Luftreifen nach Anspruch 1, wobei die Kautschukmischung einen optischen Aufheller und Titandioxid als anorganischen Füllstoff enthält.

4. Luftreifen nach einem der Ansprüche 1 bis 3, wobei die Kautschukmischung den anorganischen Füllstoff in einer Menge über 150 pce enthält.

5. Luftreifen nach einem der Ansprüche 1 bis 4, wobei die elastomere Grundmasse in einem überwiegenden Anteil einen Verschnitt aus Naturkautschuk und Polybutadien enthält.

6. Luftreifen nach einem der Ansprüche 1 bis 5, wobei zumindest ein Teil der äußeren Oberfläche einer Flanke des Luftreifens die farbige Kautschukmischung enthält.

7. Luftreifen nach einem der Ansprüche 1 bis 5, wobei zumindest ein Teil der äußeren Oberfläche des Laufstreifens des Luftreifens die farbige Kautschukmischung enthält.

## Claims

1. A tyre comprising a coloured rubber composition, the polymeric base of which is constituted majoritarily by a diene elastomer originating at least in part from conjugated diene monomers, having a content of members or units of diene origin which is greater than 15 mole %, **characterised in that** the rubber composition has a content greater than 100 parts per hundred parts by weight of elastomer, phr, of a mineral filler selected from among titanium dioxide and zinc monoxide, a content of less than 10 phr of sulphur, and comprises any coloring pigment or optical brightening agent, with a content greater than 10% of the content of titanium dioxide or of zinc monoxide.

2. A tyre according to Claim 1, in which the rubber composition comprises a coloured pigment as colouring agent, the content of coloured pigment being greater than 50% of the content of titanium dioxide or of zinc monoxide.

3. A tyre according to Claim 1, in which the rubber composition comprises an optical brightening agent and titanium dioxide as mineral filler.

4. A tyre according to any one of Claims 1 to 3, in which the rubber composition comprises a content of mineral filler greater than 150 phr.

5. A tyre according to any one of Claims 1 to 4, in which the elastomeric base comprises majoritarily a blend of natural rubber and polybutadiene.

6. A tyre according to any one of Claims 1 to 5, in which at least part of the outer surface of a sidewall of the tyre comprises the coloured rubber composition.

7. A tyre according to any one of Claims 1 to 5, in which at least part of the outer surface of the tread of the tyre comprises the coloured rubber composition.
